# EUROPEAN PATENT APPLICATION

(11) **EP 4 481 669 A1**
(43) Date of publication of application: **25.12.2024**
(21) Application number: 23756402.6
(22) Date of filing: 15.02.2023
(51) Int. Cl.: G06Q 50/30, G06Q 30/0207

(54) **INFORMATION PROCESSING SYSTEM, METHOD, DEVICE**

(30) Priority: 15.02.2022 JP 2022021550
(71) Applicant: BeMap, Inc., Tokyo, 101-0047 (JP)
(72) Inventor: SUGINO, Fuminori, Tokyo 101-0047 (JP); NAKAGAWA, Kazuyuki, Osaka-shi, Osaka 542-8503 (JP); UMATANI, Satoshi, Tokyo 101-0047 (JP); MURAKAMI, Takahiko, Osaka-shi, Osaka 542-8503 (JP); TSUJIMOTO, Noriaki, Osaka-shi, Osaka 542-8503 (JP)
(74) Representative: Michalski Hüttermann & Partner Patentanwälte mbB
(86) International application number: PCT/JP2023/005221
(87) International publication number: WO 2023/157877

(57) **Abstract**

Provided are an information processing system, a processing method, and an information processing device that make it possible to extend expense sharing by beneficiary stores/facilities at which users will spend money to users of public transportation and to support increased sales at the stores/facilities from increased consumption behavior and increased sales at the public transportation from increased use. Provided is an information processing system that is characterized by issuing "digital tickets" to users of public transportation at the expense of beneficiary stores/facilities, stimulating increases in consumption behavior at the stores/facilities by users of the "digital tickets, " and supporting sales at the stores/facilities and the public transportation.

## Description

### Technical Field

The present invention relates to, for example, information processing systems, methods, and devices, and particularly, to an information processing system, an information processing method, and an information processing device that contribute to an increase in consumption behavior.

### Background Art

For example, as a "Shizuoka Shopping Ticket", Central Japan Railway Company (JR Central) is known to offer a bargain ticket that includes a set of a "JR Round-Trip Ticket" between the departure station and Shizuoka Station and a "1000-Yen Shopping Coupon".

An example of the conditions for the "Shizuoka Shopping Ticket" is as follows.
"Applicable segment of ticket: Local ordinary train (round trip) between Numazu and Shizuoka and Kakegawa and Shizuoka
Facilities where shopping coupon can be used: Shizuoka Parche (with exceptions), Asty Shizuoka (with exceptions), Hotel Associa Shizuoka (restaurants)
Duration: Full year
Period of sale: Sold only on date of usage (no advance sale)
Period of validity: Valid only on date sold"

Kyushu Railway Company (JR Kyushu) has an "Online Purchase Only! Shopping + Round-Trip Ticket" available at 3,100 yen for adults and 2,050 yen for children on a round-trip journey on a route with a specified segment. The "Online Purchase Only! Shopping + Round-Trip Ticket" is a combination of an "outbound" ticket and a "return" ticket, as well as a coupon (worth 1,000 yen) that can be used in Amu Plaza Hakata, Amu Plaza Kokura, etc.

The conditions for the "Online Purchase Only! Shopping + Round-Trip Ticket" are as follows:
"Can be used by one person;
Cannot be used for a one-way journey by two persons;
Sold with a specified boarding date;
Tickets for children are available;
Cannot be purchased in combination with other discounts, such as a discount using various discount certificates;
Available to "JR Kyushu Web Member" at "JR Kyushu Internet Train Reservation" when booked and settled (paid) on or before a due date".

Other than JR, for example, Seibu Railway offers a service where, on a day of boat racing held at Boat Race Tamagawa, a one-way ticket (paper ticket) to Shinjuku Station is distributed in the vicinity of the nearest station.

With the increase of foreign visitors to Japan, the trend of young people not owning cars, the widespread use of smartphones, and the widespread use of cashless payments, two-dimensional bar-code tickets represented by QR codes (trademark of Denso Wave Incorporated) are being introduced.

However, user-oriented services of transit systems are still at the trial stage and have not necessarily become widespread, and are thus not user-friendly.

### Citation List

### Patent Literature

PTL 1: Japanese Unexamined Patent Application Publication No. 2013-210790
PTL 2: Japanese Unexamined Patent Application Publication No. 2021-131718

### Summary of Invention

### Technical Problem

In the technical idea described in PTL 1, two-dimensional bar-code ticket information is issued from a cash register at the store where the purchase amount is paid. The two-dimensional bar code issued from the cash register has ticket information attached thereto and is used as a substitute for a portion of the paid amount of the ticket.

In the technical idea described in PTL 2, a client applies to a campaign held by a ticket-information issuing-managing system to acquire a round-trip ticket that can be in a predetermined transit system. The ticket-information issuing-managing system extracts information settled at a predetermined commercial facility from when the client uses the outbound ticket to when the client uses the return ticket, and settles the ticket cost based on customer's payment information if the total amount is below a predetermined value or processes the ticket cost as free if the total amount is above or equal to the predetermined value.

Both PTL 1 and PTL 2 do not disclose a technical idea for assisting in increasing the sales of affiliated stores/facilities.

With travel restrictions due to the coronavirus pandemic and the propulsion of teleworking, the frequency of commuting to work and taking business trips using transit systems, such as trains and buses, has decreased, whereas the frequency of web meetings has increased. Because the number of working days for employees has decreased, businesses have changed to supplying their employees with the transportation fare for the number of days at work instead of supplying them with the fare for a monthly pass, so as to cut costs.

Moreover, the intention of businesses to promote work style reforms and enhance productivity has also aligned with the effect of the coronavirus pandemic, whereas the fare incomes of transit system companies have significantly decreased due to a decrease in the number of regular passengers.

The business models of transit system companies, such as railway companies, relying heavily on fare incomes are also changing. The effect of travel restrictions for people due to the coronavirus pandemic, changes in life styles due to the advancement of digitalization and diversification of values, an increase in the use of EC, a decrease in money spent for eating, drinking, and shopping by commuters after work, and a decrease in the number of outings on non-workdays have caused the sales of stores/facilities to decrease.

Although a service for discounting the parking fee or a service for making the parking fee free is becoming common for users using stores/facilities, even if a user uses the same store/facility, the service is limited to a case where the user owns a car.

In the case of a conventional service that uses paper tickets, there are often possibilities where tickets are issued for the number thereof not used in actuality, thus resulting in wasteful expenses for the stores/facilities.

In view of the technical problems in the related art described above, an object of the present invention is to provide an information processing system, a method, and an information processing device that can increase the sales of affiliated stores/facilities and that can assist in and bring solutions to increasing the sales of transit systems.

### Solution to Problem

In order to solve the aforementioned problems, a first aspect of the present invention provides an information processing system in which a transit-system information processing system related to a transit system, a settlement system, a workplace information processing system related to a workplace of a user using the transit system, a store/facility information processing system related to a store/facility usable by the user, and a user information processing terminal related to the user are connected via a communication network. The information processing system includes: means for causing the settlement system to transmit digital ticket information to the transit-system information processing system and the store/facility information processing system, the digital ticket information being related to a digital ticket corresponding to a one-month unlimited ride ticket for a specified segment; means for storing the digital ticket information in a storage unit of an IC card related to the user; means for transmitting store-facility burden cost information from the store/facility information processing system to the settlement system, the store-facility burden cost information being related to a store/facility consumption-behavior-increase-exchange preliminary burden cost as an exchange for an increase in consumption behavior in accordance with an increase in opportunity for visiting the store/facility; means for transmitting work-use burden cost information from the workplace information processing system to the settlement system, the work-use burden cost information being related to a work-use burden cost for allowing the user to use the transit system to work at the workplace; and means for transmitting total cost information from the settlement system to the transit-system information processing system, the total cost information being related to a total cost of the store/facility consumption-behavior-increase-exchange preliminary burden cost and the work-use burden cost.

In order to increase the consumption behavior of the user using the transit system at an affiliated store/facility and to assist in increasing the sales of the affiliated store/facility and the transit system, the settlement system issues a "digital ticket" linked with the user using the transit system and with the affiliated store/facility and distributes the burden cost proportionally according to the beneficial level of the affiliated store/facility. Accordingly, in a case where the user using the affiliated store/facility has arrived by using the transit system, such as a train or a bus, instead of a car, for example, a service for discounting the ticket fare or making the fare for the return journey free is implemented, thereby stimulating an increase in the consumption behavior of the user. The affiliated store/facility also includes a business.

Since the "digital ticket" can be reconciled, the fare actually used can be calculated and charged to each affiliated store/facility or business. This is advantageous for the store/facility or business in being able to issue a "digital ticket" casually since the store/facility or business pays for the burden cost according to the beneficial level.

In a subscription-type mode, instead of the actual fare used by the user using the transit system being settled by the affiliated store/facility, the burden cost according to the beneficial level may be determined in accordance with negotiations among the settlement system, the transit system, and the affiliated store/facility.

In this case, the store/facility-related information processing system described above includes a system related to an affiliated business.

According to a second aspect of the present invention, the information processing system according to the first aspect may further include means for enabling the user to receive an original service when the user is registered as a premium member.

Furthermore, the user using the transit system may pay a monthly premium fee to be registered as a premium member in the information processing system related to the transit system. In this case, the user of the transit system can receive original services, such as a free service to a limited express and a service giving rights to use a special lounge. Accordingly, this can also increase the sales of the transit system.

According to a third aspect of the present invention, in the information system according to the first or second aspect, the digital ticket may be issued which is linked with a cumulative amount/cumulative point value obtained by accumulating a usage amount and/or a number of points at the store/facility.

According to a fourth aspect of the present invention, in the information system according to any one of the first to third aspects, the digital ticket may be issued which is linked with a cumulative number of times obtained by accumulating a number of visits to the store/facility.

An information processing method according to a fifth aspect of the present invention is an information processing method related to an information processing system in which a transit-system information processing system related to a transit system, a settlement system, a workplace information processing system related to a workplace of a user using the transit system, a store/facility information processing system related to a store/facility usable by the user, and a user information processing terminal related to the user are connected via a communication network. The information processing method includes: causing the settlement system to transmit digital ticket information to the transit-system information processing system and the store/facility information processing system, the digital ticket information being related to a digital ticket corresponding to a one-month unlimited ride ticket for a specified segment; storing the digital ticket information in a storage unit of an IC card related to the user; transmitting store-facility burden cost information from the store/facility information processing system to the settlement system, the store-facility burden cost information being related to a store/facility consumption-behavior-increase-exchange preliminary burden cost as an exchange for an increase in consumption behavior in accordance with an increase in opportunity for visiting the store/facility; transmitting work-use burden cost information from the workplace information processing system to the settlement system, the work-use burden cost information being related to a work-use burden cost for allowing the user to use the transit system to work at the workplace; and transmitting total cost information from the settlement system to the transit-system information processing system, the total cost information being related to a total cost of the store/facility consumption-behavior-increase-exchange preliminary burden cost and the work-use burden cost.

According to a sixth aspect of the present invention, in the information processing method according to the fifth aspect, the user may be capable of receiving an original service when the user is registered as a premium member.

According to a seventh aspect of the present invention, in the information processing method according to the fifth or sixth aspect, the digital ticket may be issued which is linked with a cumulative amount/cumulative point value obtained by accumulating a usage amount and/or a number of points at the store/facility.

According to an eighth aspect of the present invention, in the information processing method according to any one of the fifth to seventh aspects, the digital ticket may be issued which is linked with a cumulative number of times obtained by accumulating a number of visits to the store/facility.

An information processing device according to a ninth aspect of the present invention is a settlement processing device related to a settlement system in an information processing system in which a transit-system information processing system related to a transit system, the settlement system, a workplace information processing system related to a workplace of a user using the transit system, a store/facility information processing system related to a store/facility usable by the user, and a user information processing terminal related to the user are connected via a communication network. The settlement processing device includes; means for transmitting digital ticket information to the transit-system information processing system and the store/facility information processing system, the digital ticket information being related to a digital ticket corresponding to a one-month unlimited ride ticket for a specified segment; means for transmitting store-facility burden cost information from the store/facility information processing system, the store-facility burden cost information being related to a store/facility consumption-behavior-increase-exchange preliminary burden cost as an exchange for an increase in consumption behavior in accordance with an increase in opportunity for visiting the store/facility; means for transmitting work-use burden cost information from the workplace information processing system, the work-use burden cost information being related to a work-use burden cost for allowing the user to use the transit system to work at the workplace; and means for transmitting total cost information to the transit-system information processing system, the total cost information being related to a total cost of the store/facility consumption-behavior-increase-exchange preliminary burden cost and the work-use burden cost.

### Advantageous Effects of Invention

Each aspect of the present invention achieves an information system that extends the beneficiary pays principle to users of transit systems, stimulates an increase in consumption behavior, increases the sales of stores/facilities in accordance with an increase of users, and provides a foundation that enables a new business model from the traditional fare-income-dependent business model of transit systems.

### Brief Description of Drawings

[Fig. 1A] Fig. 1A is a schematic diagram for describing a concept leading to the present invention and/or an embodiment of the present invention.
[Fig. 1B] Fig. 1B is a schematic diagram for describing a concept leading to the present invention and/or an embodiment of the present invention.
[Fig. 1C] Fig. 1C is a schematic diagram for describing a concept leading to the present invention and/or an embodiment of the present invention.
[Fig. 2] Fig. 2 is a schematic diagram for describing a concept leading to the present invention and/or an embodiment of the present invention.
[Fig. 3] Fig. 3 is a schematic diagram for describing a concept leading to the present invention and/or an embodiment of the present invention.
[Fig. 4] Fig. 4 is a schematic diagram for describing a concept leading to the present invention and/or an embodiment of the present invention.
[Fig. 5] Fig. 5 is a schematic diagram for describing a concept leading to the present invention and/or an embodiment of the present invention.
[Fig. 6] Fig. 6 is a schematic diagram for describing a concept leading to the present invention and/or an embodiment of the present invention.
[Fig. 7] Fig. 7 is a schematic diagram for describing a concept leading to the present invention and/or an embodiment of the present invention.
[Fig. 8] Fig. 8 is a sequence diagram illustrating a flow of operations and information between systems according to the present invention.
[Fig. 9] Fig. 9 is a sequence diagram illustrating a flow of operations and information between the systems according to the present invention.
[Fig. 10] Fig. 10 is a sequence diagram illustrating a flow of operations and information between the systems according to the present invention.

### Description of Embodiments

Embodiments of the present invention will be described below with reference to the drawings. The following includes a schematic indication of the scope required for a description for achieving the object of the present invention, and an explanation of mainly the scope required for a description of the relevant section of the present invention. Sections not described are of known technology.

"Digital ticket" information linked with a "digital ticket" includes at least one of member information, price information, journey information, journey fare information, expiry date information, affiliated business information, affiliated store/facility information, point information, time-date information, and paid amount information.

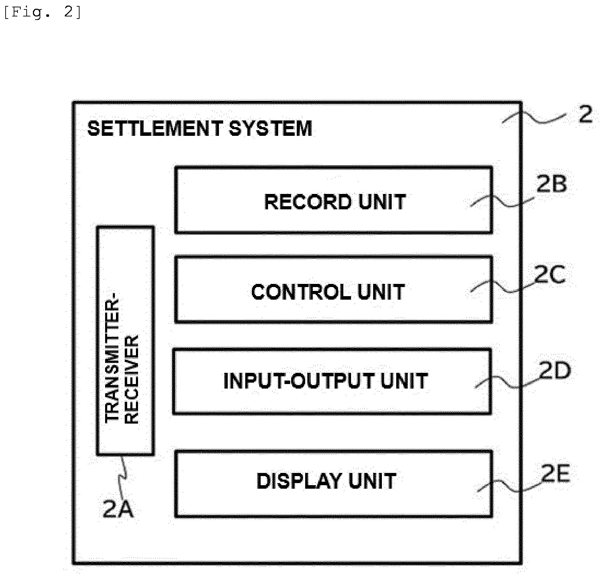

Fig. 2 is a schematic diagram for describing a concept leading to the present invention and/or an embodiment of the present invention. As shown in Fig. 2, a settlement system 2 includes a transmitter-receiver 2A, a record unit 2B, a control unit 2C, an input-output unit 2D, and a display unit 2E. As hardware, it is preferable that the settlement system 2 is constituted of a server containing a communication module, a hard disk, a memory, and a CPU, as well as a keyboard and a display (which are not shown).

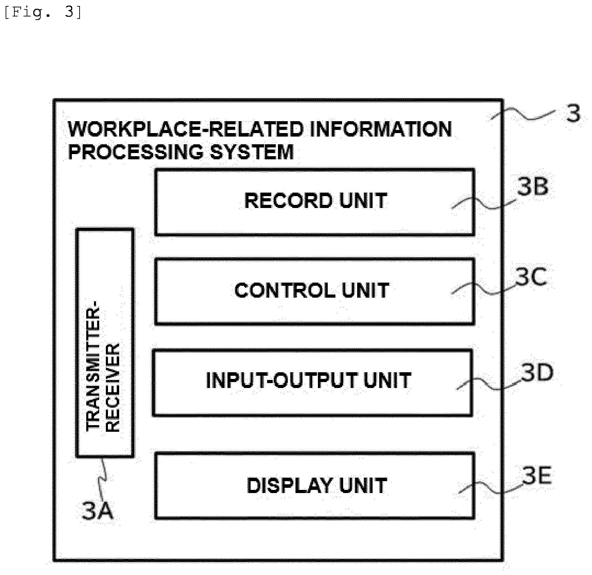

Fig. 3 is a schematic diagram for describing a concept leading to the present invention and/or an embodiment of the present invention. As shown in Fig. 3, a workplace-related information processing system 3 includes a transmitter-receiver 3A, a record unit 3B, a control unit 3C, an input-output unit 3D, and a display unit 3E. As hardware, it is preferable that the workplace-related information processing system 3 is constituted of a personal computer or server containing a communication module, a hard disk, a memory, and a CPU, as well as a keyboard and a display (which are not shown).

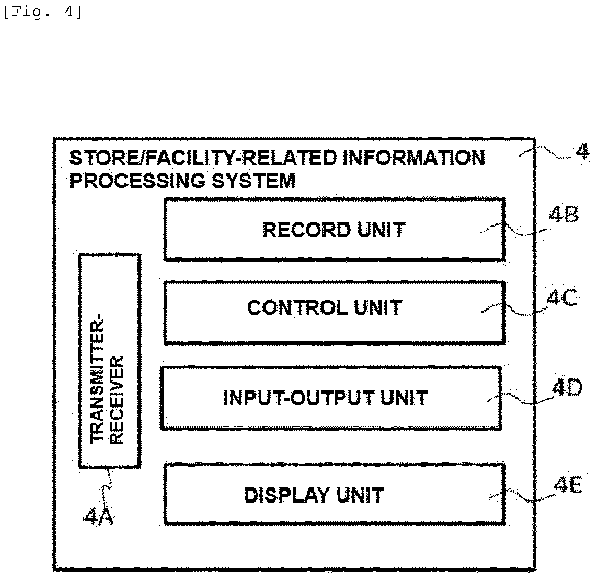

Fig. 4 is a schematic diagram for describing a concept leading to the present invention and/or an embodiment of the present invention. As shown in Fig. 4, a store/facility-related information processing system 4 includes a transmitter-receiver 4A, a record unit 4B, a control unit 4C, an input-output unit 4D, and a display unit 4E. As hardware, it is preferable that the store/facility-related information processing system 4 is constituted of a personal computer or server containing a communication module, a hard disk, a memory, and a CPU, as well as a keyboard and a display (which are not shown).

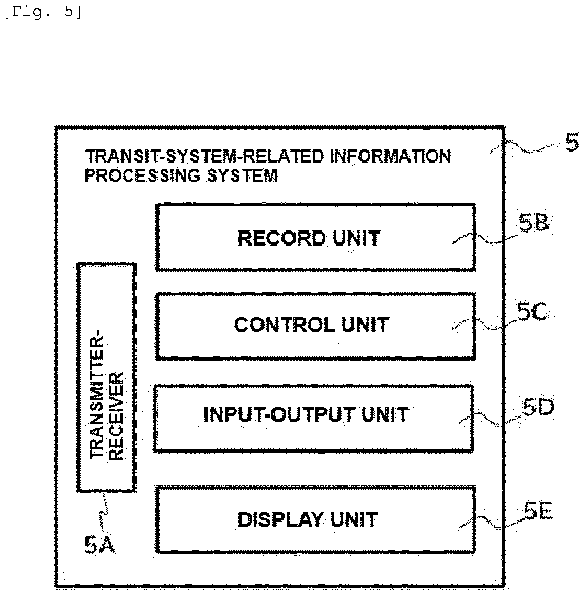

Fig. 5 is a schematic diagram for describing a concept leading to the present invention and/or an embodiment of the present invention. As shown in Fig. 5, a transit-system-related information processing system 5 includes a transmitter-receiver 5A, a record unit 5B, a control unit 5C, an input-output unit 5D, and a display unit 5E. As hardware, it is preferable that the transit-system-related information processing system 5 is constituted of a personal computer or server containing a communication module, a hard disk, a memory, and a CPU, as well as a keyboard and a display (which are not shown).

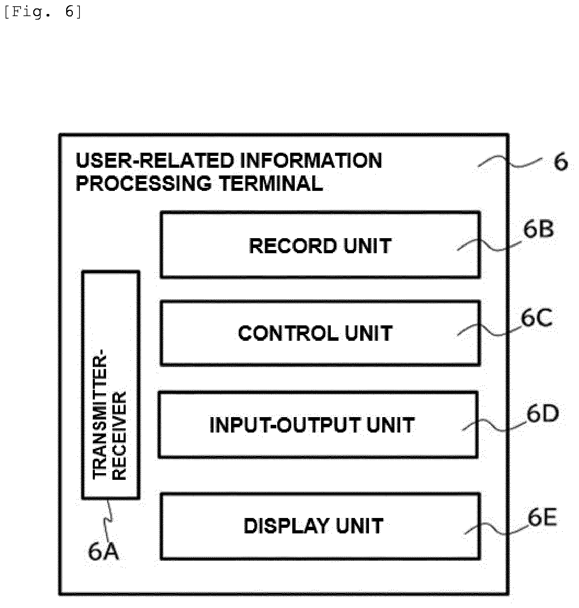

Fig. 6 is a schematic diagram for describing a concept leading to the present invention and/or an embodiment of the present invention. As shown in Fig. 6, a user-related information processing terminal 6 includes a transmitter-receiver 6A, a record unit 6B, a control unit 6C, an input-output unit 6D, and a display unit 6E. As hardware, it is preferable that the user-related information processing terminal 6 is a smartphone containing a communication module, a touchscreen-equipped display, a memory, and a CPU (which are not shown).

### [First Case]

One embodiment provides a subscription-type mode where "digital tickets" are made available to users of a transit system and the monthly burden cost is charged to affiliated businesses and affiliated stores/facilities in accordance with the beneficial levels.

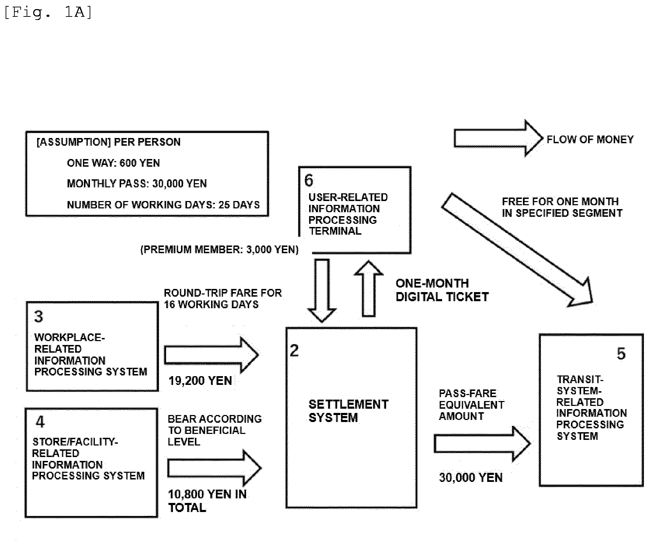

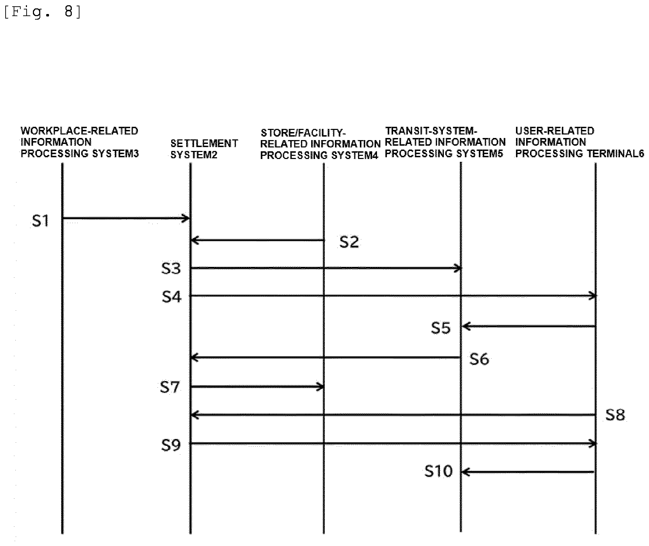

Fig. 1A is a schematic diagram for describing a concept leading to the present invention and/or an embodiment of the present invention. Fig. 8 is a sequence diagram illustrating a flow of operations and information between the systems according to the present invention.

As shown in Fig. 1A, in the embodiment of the present invention, the settlement system 2, the workplace-related information processing system 3, the store/facility-related information processing system 4, the transit-system-related information processing system 5, and the user-related information processing terminal 6 represented by a smartphone are connected via a communication network (not shown). Needless to say, the prices are merely examples.

As shown in Fig. 8, the flow of information related to each information processing system will be described as an embodiment of the present invention. However, the order of steps is not limited to this.

As shown in Fig. 1A and Fig. 8, in the embodiment of the present invention, it is assumed that one employee (user) spends a fare of 600 yen per way for commuting and works 16 days. For each person, the control unit 3C deposits 19,200 yen, which is equivalent to 16 workdays' worth of round-trip fare, from the input-output unit 3D of the workplace-related information processing system 3. Employee (member) information (information about the name, address, age, contact, company name, nearest station, station used, and so on) and burden cost information (19,200 yen) are stored in the storage unit 3B and are transmitted to the transmitter-receiver 2A of the settlement system 2 by the transmitter-receiver 3A. The business's burden cost information and the member information are stored in the storage unit 2B, and the employee is registered to become a member of the service (step S1). Because the chances of the employee (user) visiting affiliated stores (restaurants/apparel stores/entertainment facilities/cosmetic-related stores)/facilities increase, each affiliated store causes the control unit 4C to deposit 10,800 yen per user as a burden cost according to the beneficial level via the input-output unit 4D of the store/facility-related information processing system 4 in exchange for an increase in consumption behavior in accordance with a preliminary agreement with the settlement system. The deposit information is stored in the storage unit 4B and is transmitted to the transmitter-receiver 2A of the settlement system 2 by the transmitter-receiver 4A, and the store information, the time-date information, and the burden cost information are stored in the storage unit 2B of the settlement system 2 (step S2).

If a user-related IC card 6 (not shown) is used, for example, the user inserts or scans the user-related IC card 6 into or onto the input-output unit 3D of the workplace-related information processing system 3, the input-output unit 4D of the affiliated store/facility-related information system 4, or the input-output unit 5D of the transit-system-related information processing system 5, and causes the corresponding input unit to receive the member information about the user . The input member information is transmitted to the settlement system 2 by the transmitter 3A of the workplace-related information processing system 3, the transmitter-receiver 4A of the store/facility-related information system 4, or the transmitter-receiver 5A of the transit-system-related information processing system 5. The burden cost information (19,200 yen) is transmitted to the transmitter-receiver 2A of the settlement system 2 by the transmitter-receiver 3A of the workplace-related information processing system 3. The member information and "digital ticket" information are linked with each other by the control unit 2C of the settlement system 2, and are stored in the storage unit 2B. The user is registered to become a member of the service. The "digital ticket" information usable as a "digital ticket" corresponding to a one-month unlimited ride ticket for a specified segment is transmitted to the workplace-related information processing system 3, the affiliated store/facility-related information system 4, or the transit-system-related information processing system 5, and is stored in the storage unit 6B of the user-related IC card 6 by the corresponding input unit.

The user-related IC card 6 at least includes the transmitter-receiver 6A, the storage unit 6B, the control unit 6C, and the input-output unit 6D. As hardware, the user-related IC card 6 is preferably an antenna or an IC chip containing a memory and CPU.

As shown in Fig. 1A and Fig. 8, the deposit information stored in the storage unit 2B of the settlement system 2 is settled by the control unit 2C. Every month, a pass-fare equivalent amount of 30,000 yen, which is the sum of 19,200 yen and 10,800 yen, is deposited by the control unit 2C. The deposit information of 30,000 yen is transmitted to the transit-system-related information processing system 5 by the transmitter-receiver 2A and is stored in the storage unit 5B (step S3).

With regard to the transit system, the sum of 30,000 yen is equal to 25 days' worth of a round-trip fare of 1,200 yen, and is equal to the previous pass-fare equivalent amount. Accordingly, a reduction in the commutation cost income due to teleworking can be covered.

The "digital ticket" corresponding to the one-month unlimited ride ticket for the specified segment equivalent to the fare of 600 yen per way is created by the control unit 2C of the settlement system 2 as "digital ticket" information converted into a two-dimensional bar code (information containing digital information (including printed, stamped, or visibly/invisibly written information), is transmitted to the transmitter-receiver 6A of the user-related information processing terminal 6 from the transmitter-receiver 2A, and is stored in the storage unit 6B (step S4).

If the user-related IC card 6 is used, the user inserts or scans the user-related IC card 6 into or onto the input-output unit 3D of the workplace-related information processing system 3, the input-output unit 4D of the affiliated store/facility-related information system 4, or the input-output unit 5D of the transit-system-related information processing system 5. The read "digital ticket" information is transmitted to the settlement system 2 by the transmitter 3A of the workplace-related information processing system 3, the transmitter-receiver 4A of the affiliated store/facility-related information system 4, or the transmitter-receiver 5A of the transit-system-related information processing system 5. The "digital ticket" information that is linked, by the control unit 2C, with the member information in the "digital ticket" information stored in the storage unit 2B of the settlement system 2 and that is usable as the "digital ticket" corresponding to the one-month unlimited ride ticket for the specified segment is transmitted by the settlement system 2 to the workplace-related information processing system 3, the affiliated store/facility-related information system 4, or the transit-system-related information processing system 5, and is stored in the storage unit 6B of the user-related IC card 6.

At a ticket gate of the transit system, the transit-system-related information processing system 5 causes the input-output unit 5D to read the "digital ticket" information displayed on the display unit 6E of the user-related information processing terminal 6 or transmitted by the transmitter-receiver 6A, and the control unit 5C manages the entry and exit at the time of boarding of the transit system (step S5).

If the user-related IC card 6 is used, the user inserts or scans the user-related IC card 6 into or onto the input-output unit 5D of the transit-system-related information processing system 5, and the "digital ticket" information stored in the storage unit 6B of the user-related IC card 6 is read. The control unit 5C of the transit-system-related information processing system 5 manages the entry and exit of the user, and updates the "digital ticket" information. The updated "digital ticket" information is stored in the storage unit 6B of the user-related IC card 6.

The transit-system-related information processing system 5 causes the transmitter-receiver 5A to transmit, to the settlement system 2, "digital ticket" information obtained by updating the boarding record in the "digital ticket" information read by the input-output unit 5D. The settlement system 2 causes the transmitter-receiver 2A to receive the "digital ticket" information, and stores it in the storage unit 2B (step S6).

The settlement system 2 causes the control unit 2C to distribute the burden cost proportionally according to the beneficial level for each store/facility from at least one, which is linked with the stored "digital ticket" information, of member information, price information, journey information, expiry date information, affiliated business information, affiliated store/facility information, point information, time-date information, and payment information, and transmits information about the subsequent burden cost to the store/facility-related information system 4 (step 7).

The burden cost of each of the affiliated business and the affiliated store/facility mentioned above may be a monthly fixed amount, such as a semiannually/annually fixed amount, and the subsequent burden cost may be determined by being varied in accordance with the actual record.

The settlement system 2 receives from the user-related information processing terminal 6 member registration information as a premium member who desires to be provided with an original service (step S8), and transmits to the user-related information processing terminal 6 of the premium member the "digital ticket" information that makes the original service available (step S9).

The transit-system-related information processing system 5 reads the "digital ticket" information via the transmitter-receiver 6A/display unit 6E of the user-related information processing terminal 6 and confirms the usage of the original service (step S10).

If the premium member uses the user-related IC card 6, the premium member inserts or scans the user-related IC card 6 into or onto the input-output unit 5D of the transit-system-related information processing system 5. The input-output unit 5D of the transit-system-related information processing system 5 reads the "digital ticket" information stored in the storage unit 6B of the user-related IC card 6, and the control unit 5C of the transit-system-related information processing system 5 confirms the usage of the original service in accordance with the read "digital ticket" information.

As an invitation service to a limited event, for example, the premium member is invited to exclusively participate in an event unique to a railway company, such as a tour to a train depot. In this case, the "digital ticket" information stored in the storage unit 6B of the user-related information processing terminal/IC card 6 is read by the transmitter-receiver 5A/input-output unit 5D of the transit-system-related information processing system 5 at, for example, the tour venue, so that the participation of the premium member is confirmed.

Furthermore, for example, another conceivable mode involves the user paying a monthly fee of 3000 yen and presenting "digital ticket" information linked with information that makes original services limited to paid premium members available, so as to receive an offer of the original services limited to paid premium members, such as a free service to a limited express that is originally not free, a service giving rights to use a special lounge, an invitation service to a limited event, a service allowing the use of various regionally-specialized inquiry counters, and a service offered at stations.

As a service allowing the use of various regionally-specialized inquiry counters, for example, a premium member who has paid the monthly fee of 3000 yen is offered an online concierge capable of responding to regionally-specialized consultations. For example, the following are consultation examples.
- Please recommend an empathetic cram school near AA station.
- Please recommend a day-care service for looking after my parent(s) for the first time.
- Please recommend a restaurant suitable for BB event.

Alternatively, as a service offered at stations, a paid premium member is offered a station-based service, such as renting of an electric kickboard or a shared umbrella.

Accordingly, the use of "digital tickets" attracts users to stores/facilities and contributes to an increase in consumption behavior of users of a transit system at the expense of the beneficiary stores/facilities.

### [Second Case]

Another embodiment to be described below provides a mode where the users are each supplied with a return "digital ticket" for free by paying a certain amount or more for food and beverage, shopping, or facility use at affiliated stores/facilities, thereby contributing to an increase in consumption behavior of users of a transit system at the expense of the beneficiary stores/facilities.

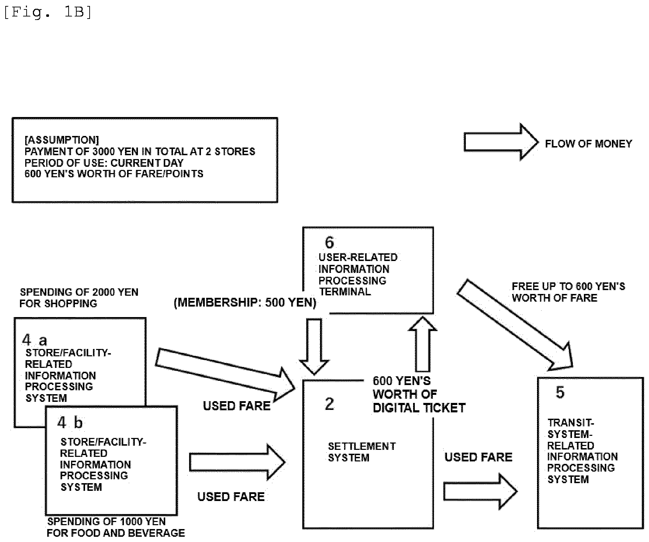

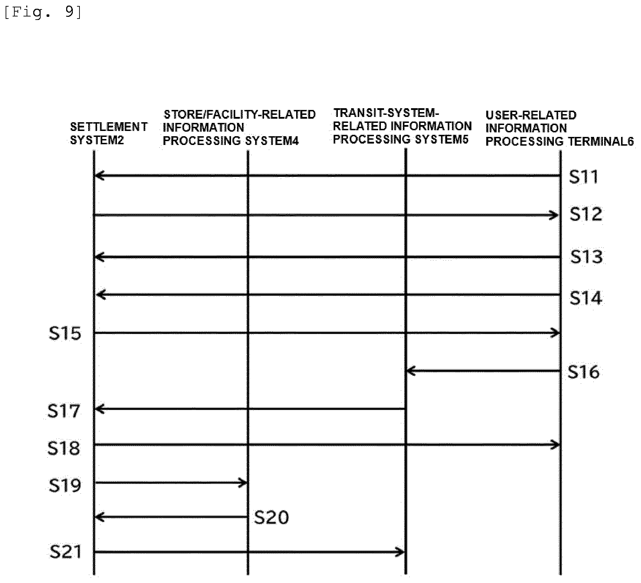

Fig. 1B is a schematic diagram for describing a concept leading to the present invention and/or an embodiment of the present invention. Fig. 9 is a sequence diagram illustrating a flow of operations and information between the systems according to the present invention.

As shown in Fig. 1B, in the embodiment of the present invention, the settlement system 2, the store/facility-related information processing system 4, the transit-system-related information processing system 5, and the user-related information processing terminal 6 represented by a smartphone are connected via a communication network (not shown). Needless to say, the prices are merely examples.

As shown in Fig. 9, the flow of information related to each information processing system will be described as an embodiment of the present invention. However, the order of steps is not limited to this.

As shown in Fig. 1B and Fig. 9, a user accesses the settlement system 2 via the user-related information processing terminal 6 to register member information (information about the name, address, age, contact, nearest station, and station used, and so on). This information is stored in the storage unit 2B of the settlement system 2, so that the user becomes a member of the service (step 11).

The user causes the display unit 6E of the user-related information processing terminal 6 to display "digital ticket" information used for a "digital ticket" stored in the storage unit 2B of the settlement system 2, and/or causes the storage unit 6B to store the "digital ticket" information (step 12).

If the user-related IC card 6 is used, for example, the user inserts or scans the user-related IC card 6 into or onto the input-output unit 4D of the affiliated store/facility-related information system 4 or the input-output unit 5D of the transit-system-related information processing system 5 and causes the corresponding input unit to receive the member information. The input member information is transmitted to the settlement system 2 by the transmitter-receiver 4A of the affiliated store/facility-related information system 4 or the transmitter-receiver 5A of the transit-system-related information processing system 5. The member information and the "digital ticket" information are linked with each other by the control unit 2C of the settlement system 2, and are stored in the storage unit 2B. The user is registered to become a member of the service. The "digital ticket" information used for a "digital ticket" corresponding to a return ticket is transmitted to the affiliated store/facility-related information system 4 or the transit-system-related information processing system 5 by the settlement system 2, and is stored in the storage unit 6B of the user-related IC card 6 by the corresponding input unit.

The following description relates to a step for supplying a 600 yen's worth of a return "digital ticket" for free as a result of the user registered as a member of the service paying a certain amount or more for food and beverage, shopping, and so on at an affiliated store/facility. This mechanism enables the use of the return "digital ticket" when 600 yen or more is reached, and is thus one solution that contributes to an increase in consumption behavior.

At an affiliated store/facility 4a, the user of the service uses a known prepaid cashless payment method to pay 2000 yen for shopping/food and beverage or facility use by using the input-output unit 6D of the information processing terminal 6 to read a two-dimensional bar code provided on the display unit 4E of the store/facility-related information processing system 4 or provided at the store/facility. Then, "digital ticket" information including price information of 2000 yen, store information, time-date information, and so on is transmitted to the transmitter-receiver 2A of the settlement system 2 by the transmitter-receiver 6A of the information processing terminal 6, is linked with the member information about the user by the control unit 2C of the settlement system 2, and is stored in the storage unit 2B (step S13).

If the user-related IC card 6 is used, the input-output unit 4D of the store/facility-related information processing system 4 reads the "digital ticket" information via the input-output unit 6D of the IC card 6 of the user at the affiliated store/facility 4a. When the user of the service pays 2000 yen for shopping/food and beverage, the "digital ticket" information including price information of 2000 yen, store information, time-date information, and so on is transmitted to the settlement system 2 by the transmitter-receiver 4A of the store/facility-related information processing system 4, is linked with the member information about the user by the control unit 2C of the settlement system 2, and is stored in the storage unit 2B.

At an affiliated store/facility 4b, the user of the service uses a known prepaid cashless payment method to pay 1000 yen for shopping/food and beverage or facility use by using the input-output unit 6D of the information processing terminal 6 to read a two-dimensional bar code provided on the display unit 4E of the store/facility-related information processing system 4 or provided at the store/facility. Then, "digital ticket" information including price information of 1000 yen, store information, time-date information, and so on is transmitted to the transmitter-receiver 2A of the settlement system 2 by the transmitter-receiver 6A of the information processing terminal 6, is linked with the member information about the user by the control unit 2C of the settlement system 2, and is stored in the storage unit 2B (step S14).

If the user-related IC card 6 is used, the input-output unit 4D of the store/facility-related information processing system 4 reads the "digital ticket" information via the input-output unit 6D of the IC card 6 of the user at the affiliated store/facility 4b. When the user of the service pays 1000 yen for shopping/food and beverage, the "digital ticket" information including price information of 1000 yen, store information, time-date information, and so on is transmitted to the settlement system 2 by the transmitter-receiver 4A of the store/facility-related information processing system 4, is linked with the member information about the user by the control unit 2C of the settlement system 2, and is stored in the storage unit 2B.

The method of payment for shopping/food and beverage or facility use is not limited to the known prepaid cashless payment method, and may be cash payment or credit card payment.

The settlement system 2 causes the control unit 2C to accumulate the price information of the current day, stored in the storage unit 2B, from the affiliated store/facility 4a and the affiliated store/facility 4b. When the cumulative amount reaches 3000 yen or more, "digital ticket" information worth 600 yen that can be used in the return journey is transmitted to the relevant user-related information processing terminal 6 (step 15).

If the user-related IC card 6 is used, the user inserts/holds the user-related IC card 6 into/over the input-output unit 4D of the affiliated store/facility-related information processing system 4 or the input-output unit 5D of the transit-system-related information processing system 5 to read the "digital ticket" information in the user-related IC card 6. The affiliated store/facility-related information processing system 4 or the transit-system-related information processing system 5 transmits the "digital ticket" information of the user to the settlement system 2 via the communication network. The 600 yen's worth of "digital ticket" information linked with the member information stored in the storage unit 6B is acquired, and is read by the input-output unit 6D of the user-related IC card 6. The acquired "digital ticket" information is stored in the storage unit 6B.

For example, after the user spends a cumulative amount of 2500 yen for shopping at an affiliated store/facility 4, even though 2500 yen is not enough for receiving the 600 yen's worth of "digital ticket", a total of 3000 yen can be reached by spending the remaining 500 yen or more for shopping. This becomes a motivation for receiving the 600 yen's worth of "digital ticket" for the return journey and increases the consumption behavior. This 500 yen assists in increasing the sales of the affiliated store.

At a ticket gate of the transit system, the transmitter-receiver 5A/input-output unit 5D of the transit-system-related information processing system 5 receives/reads the "digital ticket" information via the transmitter-receiver 6A/display unit 6E of the user-related information processing terminal 6. The control unit 5C of the transit-system-related information processing system 5 checks the amount of journey fare, the time and date, and the expiry date information based on the received/read "digital ticket" information, and manages the entry and exit at the time of boarding (step S16).

The transit-system-related information processing system 5 causes the control unit 5C to update the "digital ticket" information based on the boarding record, and transmits the "digital ticket" information to the settlement system 2. The settlement system 2 receives the "digital ticket" information via the transmitter-receiver 2A, and stores the "digital ticket" information in the storage unit 2B (step S17).

The transit-system-related information processing system 5 may transmit the boarding record of the user and the "digital ticket" information to the settlement system 2, and the "digital ticket" information may be updated by the settlement system 2.

The settlement system 2 causes the transmitter-receiver 2A to transmit the updated "digital ticket" information to the user-related information processing terminal 6 via the communication network (step 18).

If the user-related IC card 6 is used, the user inserts or holds the user-related IC card 6 into or over the input-output unit 5D of the transit-system-related information processing system 5 to read the "digital ticket" information in the user-related IC card 6. The control unit 5C checks the price information, the amount of journey fare, the time and date, and the expiry date information based on the read "digital ticket" information, manages the entry and exit at the time of boarding, and stores the "digital ticket" information with the updated journey fare into the storage unit 6B of the user-related IC card 6 via the input-output unit 5D. The transit-system-related information processing system 5 transmits the updated "digital ticket" information to the settlement system 2. The settlement system 2 stores the "digital ticket" information in the storage unit 2B.

Alternatively, the transit-system-related information processing system 5 may perform fare calculation based on the boarding record and transmit/write the updated "digital ticket" information to/into the user-related information processing terminal/IC card 6 via the transmitter-receiver 5A/input-output unit 5D. The user-related information processing terminal/IC card 6 may store the "digital ticket" information in the storage unit 6B.

The settlement system 2 causes the control unit 2C to distribute the burden cost proportionally according to the beneficial level for each store/facility from the member information, price information, journey information, expiry date information, affiliated store/facility information, point information, time-date information, and payment information that are linked with the "digital ticket" information stored in the storage unit 2B, and transmits burden cost information to each store/facility-related information system 4 (step 19).

Each store/facility causes the control unit 4C of the store/facility-related information processing system 4 to perform a payment process for the burden cost, and the payment information is transmitted to the transmitter-receiver 2A of the settlement system 2 (step S20).

The control unit 2C of the settlement system 2 performs a process for paying the transit system for the fare from the burden cost, and causes the transmitter-receiver 2A to transmit the payment process information to the transmitter-receiver 5A of the transit-system-related information processing system 5. The transit-system-related information processing system 5 causes the control unit 5C to reconcile the paid amount and the fare, thereby completing the series of processing (step S21).

As described above, since the settlement amount at an affiliated store/facility is actually equivalent to the amount of fare used by the user, wasteful expenses can be suppressed.

In an embodiment of the present invention, since a "digital ticket" is valid for the day of issue only, the 600 yen remaining when not used on the day of issue or the amount remaining when the fare used on the return journey is less than 600 yen may be kept as points. The "digital ticket" may be usable together with the received points when subsequently shopping at the affiliated store/facility.

Accordingly, the "digital ticket" that is originally valid for the return journey may be usable in addition to being limited to the day of issue, thereby attracting users to stores/facilities and contributing to an increase in consumption behavior.

### [Third Case]

Yet another embodiment to be described below provides a mode for contributing to an increase in the consumption behavior of users of a transit system using "digital tickets" by causing stores/facilities, where stamps are acquirable by the users when visiting the stores/facilities, to participate in such a stamp collecting campaign.

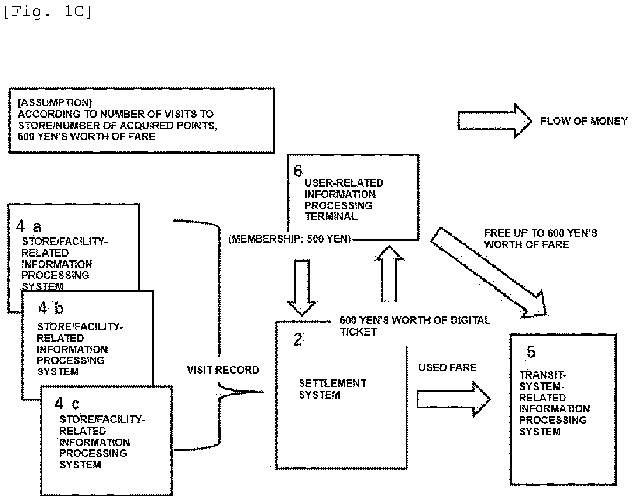

As shown in Fig. 1C, in an embodiment of the present invention, the settlement system 2, the store/facility-related information processing system 4, the transit-system-related information processing system 5, and the user-related information processing terminal/IC card 6 represented by a smartphone are provided. Needless to say, the prices are merely examples.

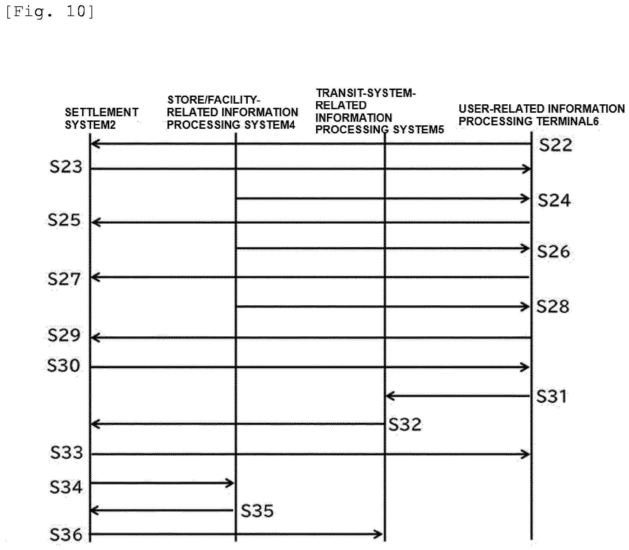

As shown in Fig. 10, the flow of information related to each information processing system will be described in an embodiment of the present invention. However, the order of steps is not limited to this.

As shown in Fig. 1C and Fig. 10, a user accesses the settlement system 2 via the user-related information processing terminal 6 to install a dedicated application, and registers member information to become a member of the service. The member information is stored in the storage unit 2B of the settlement system 2 (step 22).

When the user downloads "digital ticket" information used for a "digital ticket" by the settlement system 2 into the user-related information processing terminal 6, the system related to the information processing terminal 6 stores this information in the storage unit 6B, and displays the stored "digital ticket" information on the display unit 6E or uses the stored "digital ticket" information by outputting it via the input-output unit 6D (step 23).

When the user of the service visits the affiliated store/facility 4a, the user uses the dedicated application to cause the input-output unit 6D of the information processing terminal 6 to read a two-dimensional bar code provided on the display unit 4E of the store/facility-related information processing system 4 or provided at the store/facility (step 24). The transmitter-receiver 6A of the information processing terminal 6 transmits time-date information, store information, point information, and so on loaded from the two-dimensional bar code and the "digital ticket" information of the member to the transmitter-receiver 2A of the settlement system 2. The settlement system 2 causes the control unit 2C to link the member information with the time-date information, store information, point information, and so on, and stores the updated "digital ticket" information in the storage unit 2B (step S25).

When the user of the service visits the affiliated store/facility 4b, the user uses the dedicated application to cause the input-output unit 6D of the information processing terminal 6 to read a two-dimensional bar code provided on the display unit 4E of the store/facility-related information processing system 4 or provided at the store/facility (step 26). The transmitter-receiver 6A of the information processing terminal 6 transmits time-date information, store information, point information, and so on loaded from the two-dimensional bar code and the "digital ticket" information of the member to the transmitter-receiver 2A of the settlement system 2. The settlement system 2 causes the control unit 2C to link the member information with the time-date information, store information, point information, and so on, and stores the updated "digital ticket" information in the storage unit 2B (step S27).

When the user of the service visits an affiliated store/facility 4c, the user uses the dedicated application to cause the input-output unit 6D of the information processing terminal 6 to read a two-dimensional bar code provided on the display unit 4E of the store/facility-related information processing system 4 or provided at the store/facility (step 28). The transmitter-receiver 6A of the information processing terminal 6 transmits time-date information, store information, point information, and so on loaded from the two-dimensional bar code and the "digital ticket" information of the member to the transmitter-receiver 2A of the settlement system 2. The settlement system 2 causes the control unit 2C to link the member information with the time-date information, store information, point information, and so on, and stores the updated "digital ticket" information in the storage unit 2B (step S29).

The settlement system 2 causes the control unit 2C to perform control for accumulating the number of visits or the number of points based on the "digital ticket" information stored in the storage unit 2B. When the number of visits or the number of points preliminarily agreed between the settlement system and the affiliated store/facility exceeds a cumulative value, the settlement system 2 transmits "digital ticket" information usable as a "digital ticket" that can be used in the transit system to the relevant user-related information processing terminal 6 (step S30). The "digital ticket" information may be usable as a portion of the journey fare.

At a ticket gate of the transit system, the transmitter-receiver 5A/input-output unit 5D of the transit-system-related information processing system 5 receives or reads the "digital ticket" information via the user-related information processing terminal 6. The control unit 5C performs control to check the "digital ticket" information against the amount of the journey fare and the time and date, and manages the entry and exit and the payment at the time of boarding (step S31).

The transit-system-related information processing system 5 transmits the "digital ticket" information with the updated used journey fare information and time-date information based on the boarding record to the settlement system 2, and the settlement system 2 stores the "digital ticket" information in the storage unit 2B (step S32).

The settlement system 2 reconciles the used fare and stores the updated "digital ticket" information in the storage unit 2B, and transmits the updated "digital ticket" information to the relevant user-related information processing terminal 6 (step 33).

The settlement system 2 causes the control unit 2C to distribute the burden cost proportionally according to the beneficial level for each store/facility from the member information, price information, journey information, expiry date information, affiliated store/facility information, point information, and time-date information that are linked with the "digital ticket" information stored in the storage unit 2B, and transmits burden cost information to each store/facility-related information system 4 (step 34).

Each store/facility causes the control unit 4C of the store/facility-related information processing system 4 to perform a payment process for the burden cost, and the payment information is transmitted to the transmitter-receiver 2A of the settlement system 2 (step S35).

The control unit 2C of the settlement system 2 performs a process for paying the transit system for the actual fare from the burden cost, and causes the transmitter-receiver 2A to transmit the payment process information to the transmitter-receiver 5A of the transit-system-related information processing system 5. The transit-system-related information processing system 5 causes the control unit 5C to reconcile the paid amount and the fare, thereby completing the series of processing (step S36).

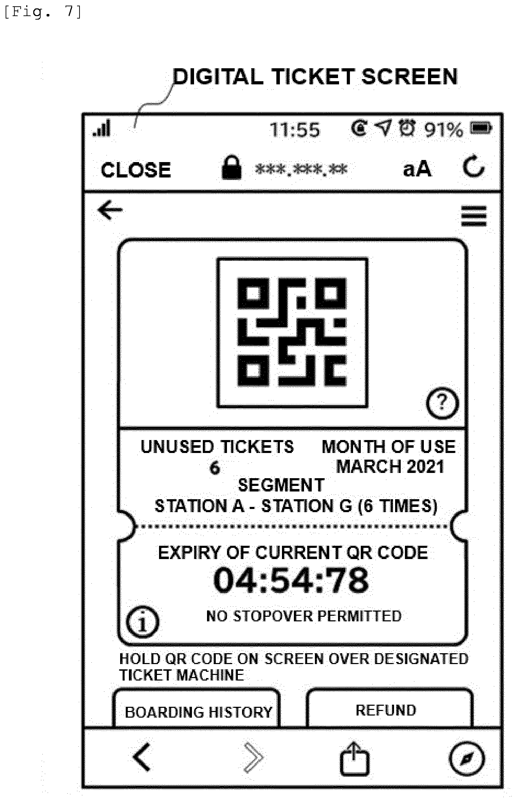

Fig. 7 is a schematic diagram for describing a concept leading to the present invention and/or an embodiment of the present invention. As shown in Fig. 7, the display unit 6E of the user-related information processing terminal 6 displays the "digital ticket" information by using a two-dimensional bar code. Pieces of information about unused tickets, month of use, segment, and expiry are displayed. By tapping on the boarding history, refund, < (back), or > (forward), a transition to the corresponding screen can be made. By operating the display unit 6E of the user-related information processing terminal 6, the user can access the settlement system 2 and input, acquire, or check necessary information.

As yet another embodiment of the present invention, "digital tickets" can be issued by a transit system, affiliated business, store/facility, travel agency, school, and so on, and may be used as a new tool for attracting customers to desired stores/facilities.

As yet another embodiment of the present invention, corporations can also be applied to the beneficiary pays principle, similar to stores/facilities, based on the theory that corporations are viable by asking employees to be involved in corporate activities by bearing the commutation cost of the employees. Specifically, each employee (user) is asked to commute and participate in a corporate activity by issuing a "digital ticket" thereto in place of a commuter pass, thereby promoting work style reforms and contributing to enhanced productivity.

As yet another embodiment of the present invention, in the second case and the third case, for example, a paid service may be possible where the user pays a membership fee of 500 yen every month. By paying the membership fee and registering the member information in the settlement system 2, the user may become a member of the paid membership service.

As yet another embodiment of the present invention, a conceivable mode involves issuing a "digital ticket" to a user participating in one of campaigns of a store/facility and selected by lottery.

As yet another embodiment of the present invention, a conceivable mode involves using "digital tickets" for gasoline, taxis, highway (paid) tolls, buses, airfares, and so on, in addition to tickets.

As yet another embodiment of the present invention, the technical beneficiary pays principle of stores/facilities may involve issuing "digital tickets" to users using deliveries and online shopping, so as to contribute to an increase in consumption behavior in the future.

As yet another embodiment of the present invention, the user-related IC card 6 may be a commuter pass/student commuter pass/boarding card issued by a transit system, a credit card, or a dedicated card of a store/facility.

As yet another embodiment of the present invention, in the first case and the second case, the user may use the user-related information processing terminal 6 to access the settlement system 2 and become a member of the service via the installed dedicated application.

As yet another embodiment of the present invention, electromagnetic data stored in the storage unit 6B may be used in place of a two-dimensional bar code.

As yet another embodiment of the present invention, without undergoing the procedure for registering the member information, the member registration may be omitted by using a terminal ID, such as an Apple (registered trademark) ID, of the user-related information processing terminal 6 represented by a smartphone.

It may also be possible to log in by using an account of an application preinstalled in a smartphone, such as a Yahoo (registered trademark) ID, a Google (registered trademark) account, a LINE (registered trademark) account, a Twitter (registered trademark) account, a Facebook (registered trademark) account, a Microsoft (registered trademark) account, or another social media account.

As yet another embodiment of the present invention, a mode involving operating in cooperation with a ticketing system using an existing two-dimensional bar code is also possible.

As yet another embodiment of the present invention, in addition to a ticket, a "digital ticket" is usable for entry management or payment to a store/facility related to a transit system.

As yet another embodiment of the present invention, the affiliated stores are not limited to restaurants/apparel stores/entertainment facilities/cosmetic-related businesses. In addition to including stores/facilities operated by transit systems, business stores/facilities of businesses affiliated with the transit systems, such as real estate businesses and travel businesses, may also be included.

As yet another embodiment of the present invention, in response to a demand from an affiliated business, store, or transit system, general information, coupons, discount information, and so on may be distributed to the user-related information processing terminal 6.

As yet another embodiment of the present invention, the first case, the second case, and the third case may be combined.

As yet another embodiment of the present invention, a commuter pass/student commuter pass may be combined with the second case or the third case. In this mode, a "digital ticket" may be used for a fare outside the segment of the commuter pass/student commuter pass.

As described above, the present invention uses "digital tickets" to attract users to stores/facilities and contributes to an increase in consumption behavior, so as to be capable of assisting in increasing the sales of affiliated stores/facilities and transit systems.

### Industrial Applicability

The information system according to the present invention can be manufactured industrially or can be used for commercial transactions, so as to have an economical value and to be industrially applicable.

### Reference Signs List

- 2: settlement system
- 2A: transmitter-receiver
- 2B: record unit
- 2C: control unit
- 2D: input-output unit
- 2E: display unit
- 3: workplace-related information processing system
- 3A: transmitter-receiver
- 3B: record unit
- 3C: control unit
- 3D: input-output unit
- 3E: display unit
- 4: store/facility-related information processing system
- 4A: transmitter-receiver
- 4B: record unit
- 4C: control unit
- 4D: input-output unit
- 4E: display unit
- 5: transit-system-related information processing system
- 5A: transmitter-receiver
- 5B: record unit
- 5C: control unit
- 5D: input-output unit
- 5E: display unit
- 6: user-related information processing terminal
- 6A: transmitter-receiver
- 6B: record unit
- 6C: control unit
- 6D: input-output unit
- 6E: display unit

## Claims

1. An information processing system in which a transit-system information processing system related to a transit system, a settlement system, a workplace information processing system related to a workplace of a user using the transit system, a store/facility information processing system related to a store/facility usable by the user, and a user information processing terminal related to the user are connected via a communication network, the information processing system comprising:
means for causing the settlement system to transmit digital ticket information to the transit-system information processing system and the store/facility information processing system, the digital ticket information being related to a digital ticket corresponding to a one-month unlimited ride ticket for a specified segment;
means for storing the digital ticket information in a storage unit of an IC card related to the user;
means for transmitting store-facility burden cost information from the store/facility information processing system to the settlement system, the store-facility burden cost information being related to a store/facility consumption-behavior-increase-exchange preliminary burden cost as an exchange for an increase in consumption behavior in accordance with an increase in opportunity for visiting the store/facility;
means for transmitting work-use burden cost information from the workplace information processing system to the settlement system, the work-use burden cost information being related to a work-use burden cost for allowing the user to use the transit system to work at the workplace; and
means for transmitting total cost information from the settlement system to the transit-system information processing system, the total cost information being related to a total cost of the store/facility consumption-behavior-increase-exchange preliminary burden cost and the work-use burden cost.

2. The information processing system according to Claim 1, further comprising means for enabling the user to receive an original service when the user is registered as a premium member.

3. The information processing system according to Claim 1 or 2, wherein the digital ticket is issued which is linked with a cumulative amount/cumulative point value obtained by accumulating a usage amount and/or a number of points at the store/facility.

4. The information processing system according to any one of Claims 1 to 3, wherein the digital ticket is issued which is linked with a cumulative number of times obtained by accumulating a number of visits to the store/facility.

5. An information processing method related to an information processing system in which a transit-system information processing system related to a transit system, a settlement system, a workplace information processing system related to a workplace of a user using the transit system, a store/facility information processing system related to a store/facility usable by the user, and a user information processing terminal related to the user are connected via a communication network, the information processing method comprising:
causing the settlement system to transmit digital ticket information to the transit-system information processing system and the store/facility information processing system, the digital ticket information being related to a digital ticket corresponding to a one-month unlimited ride ticket for a specified segment;
storing the digital ticket information in a storage unit of an IC card related to the user;
transmitting store-facility burden cost information from the store/facility information processing system to the settlement system, the store-facility burden cost information being related to a store/facility consumption-behavior-increase-exchange preliminary burden cost as an exchange for an increase in consumption behavior in accordance with an increase in opportunity for visiting the store/facility;
transmitting work-use burden cost information from the workplace information processing system to the settlement system, the work-use burden cost information being related to a work-use burden cost for allowing the user to use the transit system to work at the workplace; and
transmitting total cost information from the settlement system to the transit-system information processing system, the total cost information being related to a total cost of the store/facility consumption-behavior-increase-exchange preliminary burden cost and the work-use burden cost.

6. The information processing method according to Claim 5, wherein the user is capable of receiving an original service when the user is registered as a premium member.

7. The information processing method according to Claim 5 or 6, wherein the digital ticket is issued by being linked with a cumulative amount/cumulative point value obtained by accumulating a usage amount and/or a number of points at the store/facility.

8. The information processing method according to any one of Claims 5 to 7, wherein the digital ticket is issued by being linked with a cumulative number of times obtained by accumulating a number of visits to the store/facility.

9. A settlement processing device related to a settlement system in an information processing system in which a transit-system information processing system related to a transit system, the settlement system, a workplace information processing system related to a workplace of a user using the transit system, a store/facility information processing system related to a store/facility usable by the user, and a user information processing terminal related to the user are connected via a communication network, the settlement processing device comprising:
means for transmitting digital ticket information to the transit-system information processing system and the store/facility information processing system, the digital ticket information being related to a digital ticket corresponding to a one-month unlimited ride ticket for a specified segment;
means for transmitting store-facility burden cost information from the store/facility information processing system, the store-facility burden cost information being related to a store/facility consumption-behavior-increase-exchange preliminary burden cost as an exchange for an increase in consumption behavior in accordance with an increase in opportunity for visiting the store/facility;
means for transmitting work-use burden cost information from the workplace information processing system, the work-use burden cost information being related to a work-use burden cost for allowing the user to use the transit system to work at the workplace; and
means for transmitting total cost information to the transit-system information processing system, the total cost information being related to a total cost of the store/facility consumption-behavior-increase-exchange preliminary burden cost and the work-use burden cost.
